# EUROPÄISCHE PATENTSCHRIFT

(11) **EP 2 803 905 B1**
(45) Veröffentlichungstag und Bekanntmachung des Hinweises auf die Patenterteilung: **17.02.2016**
(21) Anmeldenummer: 14165932.6
(22) Anmeldetag: 25.04.2014
(51) Int. Cl.: F21V 8/00, F21S 8/10

(54) **Kraftfahrzeugbeleuchtungseinrichtung mit einer Lichtleiteranordnung**
Motor vehicle lighting device with a fibre optic assembly
Dispositif d'éclairage de véhicule automobile doté d'un agencement de conducteurs de lumière

(30) Priorität: 14.05.2013 DE 102013208925
(43) Veröffentlichungstag der Anmeldung: 19.11.2014
(73) Patentinhaber: Automotive Lighting Reutlingen GmbH, 72762 Reutlingen (DE)
(72) Erfinder: Gebauer, Matthias, 72770 Reutlingen (DE); Ladenburger, Andreas, 89075 Ulm (DE)
(74) Vertreter: DREISS Patentanwälte PartG mbB

(56) Entgegenhaltungen:
- EP-A1- 2 565 689
- EP-A2- 2 048 430
- EP-A2- 2 397 876
- DE-A1-102004 047 653
- DE-A1-102005 029 363
- DE-A1-102011 000 038
- DE-B3-102011 016 002
- DE-B3-102011 112 321
- US-A1- 2003 006 230
- US-A1- 2006 171 137

## Beschreibung

Die vorliegende Erfindung betrifft eine Kraftfahrzeugbeleuchtungseinrichtung mit einer Lichtleiteranordnung, die eine Vorderseite, eine der Vorderseite gegenüberliegende und Lichtumlenkelemente aufweisende Rückseite sowie die Vorderseite und die Rückseite verbindende Seitenflächen aufweist und welche Anordnung dazu eingerichtet ist, Licht, das an den Seitenflächen und der Vorderseite interne Totalreflexionen erfährt, in einer Längsrichtung der Lichtleiteranordnung zu leiten, und an seinen Lichtumlenkelementen reflektiertes Licht über seine Vorderseite austreten zu lassen.

Eine solche Kraftfahrzeugbeleuchtungseinrichtung ist aus der DE 10 2005 029 363 A1 bekannt.

Der Lichtleiter der bekannten Kraftfahrzeugbeleuchtungseinrichtung ist als Leuchtring ausgestaltet. Der Durchmesser des Leuchtrings beträgt ein Mehrfaches einer Abmessung eines Querschnitts des Lichtleiters. Seine Längsausdehnung ist entsprechend groß gegenüber seiner Querausdehnung. Es handelt sich insofern um einen langgestreckten Lichtleiter. Als Umlenkelemente dienen Prismen, die das Licht so steil auf die Vorderseite lenken, dass es beim Auftreffen dort keine interne Totalreflexion erfährt sondern aus dem Ring austritt. Der Ring ist nicht als Endlosschleife verwirklicht, sondern er weist zwei Enden auf, die sich etwa rechtwinklig kreuzen und dabei gegenseitig durchdringen. Die Einkopplung von Licht erfolgt über die Stirnseiten der beiden Enden. Dies hat den Nachteil, dass mit dieser Struktur eine geschlossene und leuchtende Kontur nicht verwirklicht werden kann.

Grundsätzlich kann man auch einen strukturell geschlossenen Ring verwenden, in den das Licht radial eingekoppelt und durch einen im Ring angeordneten Umlenker in die gewünschte tangentiale Umfangsrichtung umgelenkt wird. Dies kann zum Beispiel durch in einem Winkel von 45° zur Radialrichtung angeordnete Spiegelelemente erfolgen. Dabei tritt aber der Nachteil auf, dass die bei der Einkopplung erfolgende Umlenkung deutlich sichtbar ist. Als Folge kann auch mit dieser Struktur ein geschlossen ringförmig leuchtendes Erscheinungsbild nicht verwirklicht werden.

Aus der DE 202 068 29 U1 ist eine Leuchte bekannt, die einen Lichtleitkörper mit scheibenförmiger Grundform aufweist. In der Mitte einer Scheibenfläche ist ein Umlenker angeordnet, der Licht einer zentral vor einer Mitte der Scheibenfläche angeordneten und Licht in Richtung der Scheibenfläche abstrahlenden Lichtquelle radial nach außen umlenkt. An der äußeren Peripherie ist ein weiterer, die Scheibe umlaufenden Umlenker in die Scheibe integriert, der das dort auftreffende Licht über eine Scheibenfläche austreten lässt. Diese Leuchte hat den Nachteil, dass der innere Bereich der Scheibe für die Strahlengänge des radial nach außen umgelenkten Lichtes zur Verfügung stehen muss, so dass man in diesem inneren Bereich keine Komponenten anderer Lichtfunktionen anordnen kann. Eine Anordnung, bei der zum Beispiel ein Tagfahrlichtring um einen Scheinwerfer herum verläuft, lässt sich damit nicht verwirklichen Aus der EP 2 397 876 ist eine Kraftfahrzeugbeleuchtungseinrichtung bekannt, mit einem langgestreckten Lichtleiter.

Vor diesem Hintergrund besteht die Aufgabe der vorliegenden Erfindung darin, eine Leuchte der eingangs genannten Arte bereit zu stellen, welche die genannten Nachteile vermeidet oder sie zumindest verringert. Die Erfindung soll insbesondere die Verwirklichung einer ringförmigen Leuchte erlauben, in deren inneren Bereich Platz für Komponenten weiterer Lichtfunktionen ist und die über eine geschlossene Kontur hinweg ein homogen hell leuchtendes Erscheinungsbild bietet.

Diese Aufgabe wird mit den Merkmalen des Anspruchs 1 gelöst. Die erfindungsgemäße Lösung zeichnet sich dadurch aus, dass die Lichtleiteranordnung wenigstens einen ersten Lichtleiter und einen zweiten Lichtleiter aufweist, wobei jeder der beiden Lichtleiter einen Einkoppelarm mit einem ersten Querschnitt, einen Lichtleiterbereich mit einem zweiten Querschnitt, und einen Übergangsbereich aufweist, der zwischen dem Einkoppelarm und dem Lichtleiterbereich liegt und in dem sich der Querschnitt kontinuierlich und monoton vom ersten Querschnitt auf den zweiten Querschnitt vergrößert, wobei der Einkoppelarm eines jeden der beiden Lichtleiter jeweils eine erste Anlagefläche aufweist und der Übergangsbereich eines jeden der beiden Lichtleiter jeweils eine zweite Anlagefläche aufweist, und wobei die ersten Anlageflächen und die zweiten Anlageflächen so geformt sind, dass sich der Einkoppelarm des einen Lichtleiters jeweils in den Übergangsbereich des anderen Lichtleiters einfügt, wobei die zweite Anlagefläche des Übergangsbereichs des einen Lichtleiters an der ersten Anlagefläche des Einkoppelarms des anderen Lichtleiters anliegt, und dass jeder der beiden Einkoppelarme in einem an dem Übergangsbereich des jeweils anderen Lichtleiters anliegenden Abschnitt des jeweiligen Einkoppelarms zur Vorderseite des Einkoppelarms umlenkende Umlenkelemente auf einer Rückseite des Einkoppelarms aufweist.

Diese Merkmale erlauben eine unproblematische Einkopplung von Licht über als Lichteintrittsflächen dienende Stirnseiten der Einkoppelarme und ein Zusammenfügen der beiden Lichtleiter zu einer für einen Betrachter anscheinend zusammenhängenden Struktur, die auch geschlossene Ringformen ermöglicht, in deren Mitte andere Komponenten, insbesondere Komponenten anderer Lichtfunktionen angeordnet werden können.

Dadurch, dass jeder der beiden Lichtleiter einen Einkoppelarm mit einem ersten Querschnitt, einen Lichtleiterbereich mit einem zweiten Querschnitt, und einen Übergangsbereich aufweist, der zwischen dem Einkoppelarm und dem Lichtleiterbereich liegt und in dem sich der Querschnitt kontinuierlich und monoton vom ersten Querschnitt auf den zweiten Querschnitt vergrößert, ergibt sich im Übergangsbereich eine gewisse Bündelung des in den Übergangsbereich eintretenden Lichtes. Dies ergibt sich aus der Geometrie. Der Öffnungswinkel des Lichtes, das aus dem Übergangsbereich in den benachbarten Lichtleiterbereich übertritt, besitzt einen kleineren Öffnungswinkel als das vom Einkoppelarm in den Übergangsbereich eintretende Licht.

Dies verbessert den Lichttransport in den Lichtleiterbereichen. Dadurch, dass sich der Einkoppelarm des einen Lichtleiters jeweils in den Übergangsbereich des anderen Lichtleiters einfügt, wobei die zweite Anlagefläche des Übergangsbereichs des einen Lichtleiters an der ersten Anlagefläche des Einkoppelarms des anderen Lichtleiters anliegt, ergibt sich für den Betrachter der erwünschte Eindruck einer zusammenhängenden Struktur.

Dadurch, dass jeder der beiden Einkoppelarme in einem an dem Übergangsbereich des jeweils anderen Lichtleiters anliegenden Abschnitt des jeweiligen Einkoppelarms zur Vorderseite des Einkoppelarms umlenkende Umlenkelemente auf einer Rückseite des Einkoppelarms aufweist, erfolgt eine Lichtauskopplung auch in dem Bereich, in dem die Lichtleiter aneinander anliegen und in dem Licht eingekoppelt wird. Dadurch ergibt sich das erwünschte homogene Erscheinungsbild, was bei dem Stand der Technik mit der radialen Einkopplung nicht erzielbar ist.

Eine bevorzugte Ausgestaltung zeichnet sich dadurch aus, dass die Lichtleiteranordnung eine geschlossene Ringform besitzt.

Bevorzugt ist auch, dass jeder Einkoppelarm mit seinem Lichtleiter eine einstückige und damit stoffschlüssig zusammenhängende Einheit bildet. Dadurch wird ein hoher Wirkungsgrad der Einkopplung von Licht in den Lichtleiter erzielt.

Bevorzugt ist auch, dass die Anlageflächen jeweils in der Richtung, in der sich die Querschnitte vergrößern, gewölbt sind, wobei die Anlagefläche des Übergangsbereichs jeweils konkav gewölbt ist und die Anlagefläche des Einkoppelarms jeweils konvex gewölbt ist. Durch diese Art der Wölbung wird eine gleichmäßige und verlustarme Umlenkung des in dem Einkoppelarm propagierenden Lichtes in die Lichtleiterrichtung erzielt.

Ferner ist bevorzugt, dass der erste Querschnitt halb so groß ist wie der zweite Querschnitt. Durch dieses Merkmal werden maximal große Einkoppelquerschnitte bei symmetrisch großer Aufteilung auf zwei Einkoppelarme erzielt.

Bevorzugt ist auch, dass sich die Anlageflächen nur soweit berühren, dass sie über den größten Teil ihre Fläche durch einen minimalen Luftspalt voneinander getrennt verlaufen. Durch den Luftspalt wir ein dort unerwünschter optischer Kontakt, über den Licht aus dem einen Lichtleiter unerwünscht in den anderen Lichtleiter übertreten könnte, minimiert.

Ferner ist bevorzugt, dass sich die Breiten der Umlenkelemente der im Übergangsbereich aneinander anliegenden Lichtleiter dort zu einer Breite addieren, die der Breite der außerhalb der Übergangsbereiche angeordneten Umlenkelemente entspricht, oder dass sich die Breiten der Umlenkelemente der im Übergangsbereich aneinander anliegenden Lichtleiter dort zu einer Breite addieren, die größer als die Breite der außerhalb der Übergangsbereiche angeordneten Umlenkelemente ist.

Die addierte Breite ist ein Konstruktionsparameter, mit dem sich die dort ausgekoppelte Lichtmenge beeinflussen lässt. Je größer die addierte Breite ist, desto mehr Licht wird dort ausgekoppelt. Diese Ausgestaltungen erlauben es, die Helligkeit so einzustellen, dass der Übergangsbereich jeweils genauso hell leuchtet wie benachbarte Lichtleiterbereiche.

Bevorzugt ist auch, dass ein Einkoppelarm eines Lichtleiters mit dem Lichtleiterbereich des jeweils anderen Lichtleiters einen Winkel einschließt, der jeweils durch Führungslinien des Lichtleiterbereichs und des Einkoppelarms definiert wird.

Eine weitere bevorzugte Ausgestaltung zeichnet sich dadurch aus, dass dieser Winkel mit zunehmender Annäherung des Einkoppelarms des einen Lichtleiters an den Lichtleiterbereich des anderen Lichtleiters kontinuierlich kleiner wird, bis er sich auf den Wert Null verringert hat und die Führungslinien der Einkoppelarme damit parallel zu den Führungslinien der Lichtleiterbereich verlaufen. Damit wird das Licht gewissermaßen in der bevorzugten Transportrichtung eingekoppelt, was zu einem homogenen Erscheinungsbild beiträgt.

Bevorzugt ist auch, dass die ersten Querschnitte der Einkoppelarms dabei vollständig im Querschnitt des jeweils zugehörigen Lichtleiters verschwinden. Dies ergibt einen guten Wirkungsgrad der Einkopplung und ein gutes Aussehen der Lichtleiteranordnung weil zum Beispiel störende Stufen vermieden werden.

Ferner ist bevorzugt, dass sich die beiden halben Querschnitte, von denen einer zu einem Übergangsbereich und der andere zu einem Einkoppelarm gehört, dort, wo die Führungslinien den parallelen Verlauf aufweisen, zu einem ganzen Querschnitt ergänzen. Als erwünschte Folge wird dieser ganze Querschnitt homogen mit gebündeltem Licht ausgeleuchtet, was für den Weitertransport und die Weiterverarbeitung der Lichtbündel in der Lichtleiteranordnung günstig ist.

Bevorzugt ist auch, dass die Anlageflächen beider Lichtleiter der Lichtleiteranordnung tangential zueinander verlaufen. Dadurch werden unerwünscht große Luftspalte vermieden.

Bevorzugt ist auch, dass die als Lichtaustrittsseite dienende Vorderseite konvex gewölbt ist. Dies verbessert das Erscheinungsbild, weil die durch die Lichtleiteranordnung hindurch sichtbaren Umlenkelemente, die auf der dem Betrachter abgewandten Rückseite angeordnet sind, für den Betrachter breiter erscheinen als sie in Wirklichkeit sind.

Ferner ist bevorzugt, dass die Lichtleiteranordnung eine Querschnittsgeometrie aufweist, bei der die durch das Material der Lichtleiteranordnung und die Krümmung ihrer Vorderseite erzielte Linsenwirkung und die Breite der Lichtumlenkelemente sowie die außerhalb der Lichtumlenkelemente noch verbleibende Breite der Seitenflächen in dieser Richtung so aufeinander abgestimmt sind, dass durch die Vorderseite hindurch nur noch die Lichtumlenkelemente sichtbar sind und die Seitenflächen nicht mehr sichtbar sind.

Weitere Vorteile ergeben sich aus den abhängigen Ansprüchen, der Beschreibung und den beigefügten Figuren.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

### Zeichnungen

Ausführungsbeispiele der Erfindung sind in den Zeichnungen dargestellt und werden in der nachfolgenden Beschreibung näher erläutert. Dabei bezeichnen gleiche Bezugszeichen in den verschiedenen Figuren jeweils gleiche Elemente. Es zeigen, jeweils in schematischer Form:
- Figur 1: das technische Umfeld der Erfindung in Form einer Kraftfahrzeugbeleuchtungseinrichtung mit einer zwei Lichtleiter aufweisenden Lichtleiteranordnung;
- Figur 2: einen Abschnitt eines Lichtleiters aus der Figur 1 in einer perspektivischen und schematischen Ansicht;
- Figur 3: eine Merkmale der Erfindung aufweisende Lichtleiteranordnung;
- Figur 4: einen vergrößerten Ausschnitt aus der Figur 3 für den Bereich der Lichteinkopplung;
- Figur 5: einen bevorzugten Querschnitt einer Lichtleiteranordnung in einem zentralen Einkopplungsbereich einer Merkmale der Erfindung aufweisenden Lichtleiteranordnung; und
- Figur 6: ein Erscheinungsbild der Lichtleiteranordnung aus Figur 3 bei eingeschalteten Lichtquellen.

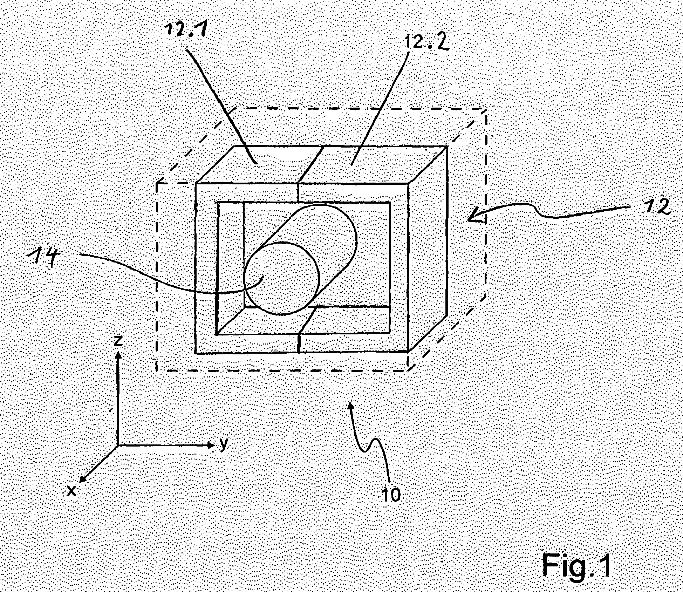

Im Einzelnen zeigt die Figur 1 eine Kraftfahrzeugbeleuchtungseinrichtung 10 mit einer Lichtleiteranordnung 12, die zwei Lichtleiter 12.1 und 12.2 aufweist. Die Anordnung von wenigstens zwei Lichtleitern in einer einander ergänzenden Anordnung stellt bereits ein Merkmal der Erfindung dar. Darüber hinaus zeigt Figur 1 ein Lichtmodul 14 sowie ein räumliches Koordinatensystem mit Richtungen x, y und z. Bei der Beleuchtungseinrichtung 10 handelt es sich entweder um eine Signalfunktionen erfüllende Leuchte und/oder um einen Beleuchtungsfunktionen erfüllenden Scheinwerfer.

In der dargestellten Ausgestaltung ist das Lichtmodul 14 ein Scheinwerferlichtmodul, das ein Abblendlicht und/oder ein Fernlicht bereitstellt. Bei anderen Ausgestaltungen einer Kraftfahrzeugbeleuchtungseinrichtung kann das Lichtmodul 14 auch entfallen oder eine Signallichtfunktion erfüllen. Beispiele von Signallichtfunktionen sind Positionslichtfunktionen, Tagfahrlicht-, Blinklicht- und Bremslichtfunktionen. Alternativ oder ergänzend zur Erfüllung einer Signallichtfunktion kann die Lichtleiteranordnung 12 auch zur Erzeugung einer Nebellichtverteilung verwendet werden.

Aufgrund der Eignung der langgestreckten und hier geschlossen ringförmigen Lichtleiteranordnung 12 zur Erfüllung genereller Signallichtfunktionen ist die Erfindung nicht auf eine Verwendung bei Scheinwerfern beschränkt und kann auch bei Heckleuchten oder Bugleuchten verwendet werden.

Die Beleuchtungseinrichtung 10 ist daher, je nach Ausgestaltung, eine beliebige Leuchte eines Kraftfahrzeugs. Die Raumrichtung x gibt eine Hauptabstrahlrichtung der Beleuchtungseinrichtung 10 an. Dient die Beleuchtungseinrichtung 10 als Scheinwerfer, entspricht die Richtung x der Fahrtrichtung. Bei einer Heckleuchte als Beleuchtungseinrichtung 10 ist die Richtung x entgegengesetzt zur Fahrtrichtung gerichtet. Die Raumrichtung y liegt parallel zu einer Querachse des Fahrzeugs und die Raumrichtung z liegt parallel zu einer Hochachse des Fahrzeugs.

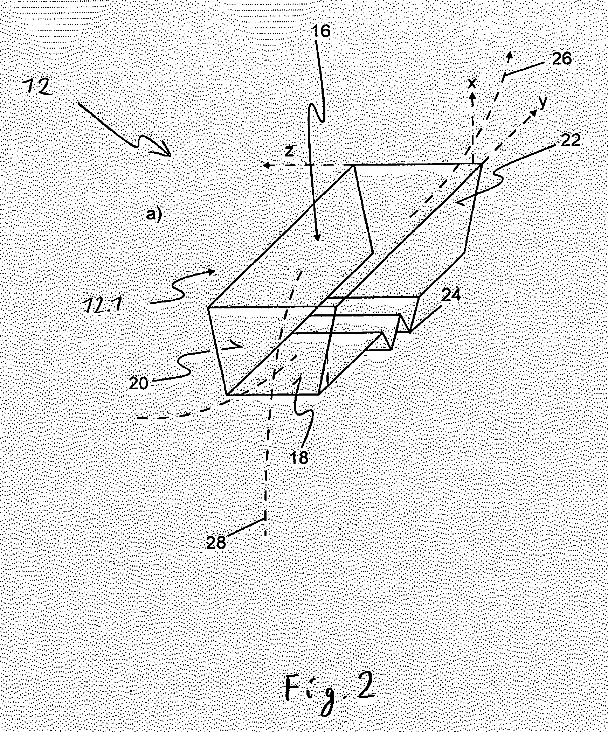

Figur 2 zeigt stark schematisiert einen Abschnitt einer Lichtleiteranordnung 12 in einer perspektivischen Ansicht. Mit Blick auf die in der Figur 2 dargestellten Merkmale ist es dabei unwichtig, zu welchem der beiden Lichtleiter der Abschnitt gehört. Die Lichtleiteranordnung 12 weist eine Vorderseite 16, eine Rückseite 18 sowie die Vorderseite 16 und die Rückseite 18 verbindende Seitenflächen 20, 22 auf. Die Rückseite 18 weist Lichtumlenkelemente 24 auf, die zum Beispiel die dargestellte Prismenform besitzen und als Vertiefungen in der Rückseite 18 oder als Erhöhungen auf der Rückseite 18 realisiert sind.

Die Lichtleiteranordnung 12 ist durch ihre Form und optischen Materialeigenschaften dazu eingerichtet, in ihrem Inneren propagierendes Licht, das an ihren Seitenflächen 20, 22 und an ihrer Vorderseite 16 interne Totalreflexionen erfährt, in einer Längsrichtung 26 zu leiten und an ihren Lichtumlenkelementen 24 reflektiertes Licht über ihre Vorderseite 16 austreten zu lassen. Die Vorderseite 16 dient damit insbesondere als Lichtaustrittsfläche der Lichtleiteranordnung 12.

Aus Gründen der Übersichtlichkeit sind in der Figur 2 lediglich zwei Lichtumlenkelemente 24 dargestellt. Losgelöst von dieser vereinfachten Darstellung soll die reale Lichtleiteranordnung 12 jedoch eine Vielzahl solcher Lichtumlenkelemente 24 aufweisen, die in vorbestimmter Weise in der Rückseite 18 verteilt, insbesondere regelmäßig verteilt, angeordnet sind. Diese Beschreibung soll losgelöst von der in der Figur lediglich schematisch dargestellten Lichtleitergeometrie für sämtliche Ausführungsbeispiele gelten.

In einer bevorzugten Ausgestaltung besitzt die Lichtleiteranordnung 12 eine Ringform, wobei die vom Ring eingeschlossene Fläche in der y-z-Ebene und damit senkrecht zur Abstrahlrichtung x liegt. Dies entspricht der Figur 1. Die wenigsten zwei Lichtleiter müssen sich aber nicht zu einem geschlossenen Ring ergänzen.

Der gestrichelte Pfeil 26 repräsentiert eine Längsrichtung der Lichtleiteranordnung 12, die auch als Führungslinie verstanden werden kann. Die Führungslinie 26 kann als Bahn der Schwerpunkte von Querschnittsflächen der Lichtleiteranordnung 12 aufgefasst werden. Dabei ist jeweils eine Querschnittsfläche gemeint, deren Flächennormale parallel zur Längsausdehnung der Lichtleiteranordnung 12 liegt.

Zur Veranschaulichung wird losgelöst von der der Figur 2 als Beispiel ein Lichtleiter betrachtet, der die Form eines langen Zylinders besitzt. In diesem Fall sind die Querschnitte Kreisflächen. Die Flächenschwerpunkte sind die geometrischen Mittelpunkte, und die Führungslinie dann die Zylinderachse.

Im Fall eines langgestreckten Lichtleiters wird die Hauptausbreitungsrichtung des in ihm propagierenden Licht im Wesentlichen der Führungsrichtung des Lichtleiters folgen.

Der gekrümmte Verlauf der Führungslinie 26 in der Figur 2 deutet einen gekrümmten Verlauf der Lichtleiteranordnung 12 an. Ein solcher Verlauf ist bevorzugt, da zu enge Radien und insbesondere Ecken, wie sie in der Figur 1 dargestellt sind, zu einer gegebenenfalls unerwünschten Lichtauskopplung führen würden. Die Figur 1 ist insofern lediglich als schematische Übersichtsdarstellung zu verstehen.

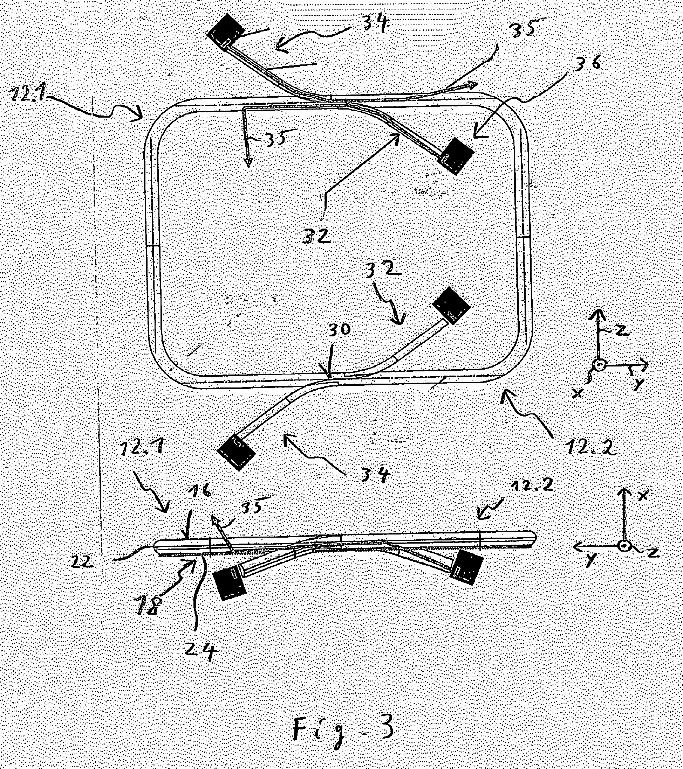

Figur 3 zeigt eine realistischere Radien aufweisende Lichtleiteranordnung. Dabei zeigt die Figur 3a eine Vorderansicht, und die Figur 3b zeigt eine Draufsicht.

Die in der Figur 3 dargestellte Lichtleiteranordnung 12 weist einen ersten Lichtleiter 12.1 und einen zweiten Lichtleiter 12.2 auf. Die beiden Lichtleiter sind durch Luftspalte 30, die sich in der Anordnung zwischen Anlageflächen der Lichtleiter ergeben, optisch voneinander getrennt. Jeder der beiden Lichtleiter weist wenigstens einen Einkoppelarm 32, 34 auf. Die Ausgestaltung, die in der Figur 3 dargestellt ist, weist für jeden der beiden Lichtleiter je zwei Einkoppelarme auf. Die beiden ringinneren Einkoppelarme 32 gehören dabei zu dem ersten Lichtleiter 12.1, und die beiden ringäußeren Einkoppelarme 34 gehören dabei zu dem zweiten Lichtleiter 12.2.

Je ein ringinnerer Einkoppelarm 32 und ein ringäußerer Einkoppelarm 34 sind tangential aneinander vorbei laufend und damit antiparallel zueinander ausgerichtet. Licht 35 wird in diese jeweils ein Paar bildenden Einkoppelarme mit entgegengesetzter Propagationsrichtung eingekoppelt. Das Licht stammt dabei jeweils von einer Lichtquelle 36, die an einem distalen Ende des Einkoppelarms angeordnet ist und die Licht über eine Stirnfläche des Einkoppelarms in den Einkoppelarm einkoppelt. Bei der Lichtquelle 36 handelt es sich bevorzugt um eine Baugruppe aus einer Halbleiterlichtquelle, ihrer Platine und ihrem Kühlkörper.

Jeder Einkoppelarm bildet mit seinem Lichtleiter eine einstückige und damit stoffschlüssig zusammenhängende Einheit, so dass sich das in den Einkoppelarm eingekoppelte Licht 35 im zugehörigen Lichtleiter ausbreitet und verteilt, bis es auf ein auf der Rückseite 18 angeordnetes Umlenkelement 24 trifft und anschließend über eine Vorderseite 16 des Lichtleiters austritt.

Figur 3b zeigt die Lichtleiteranordnung 12 in einer Draufsicht, die eine Vorderseite 16 und eine der Vorderseite gegenüberliegende und Lichtumlenkelemente 24 aufweisende Rückseite 18 aufweist. Die Vorderseite und die Rückseite werden durch Seitenflächen 22 miteinander verbunden.

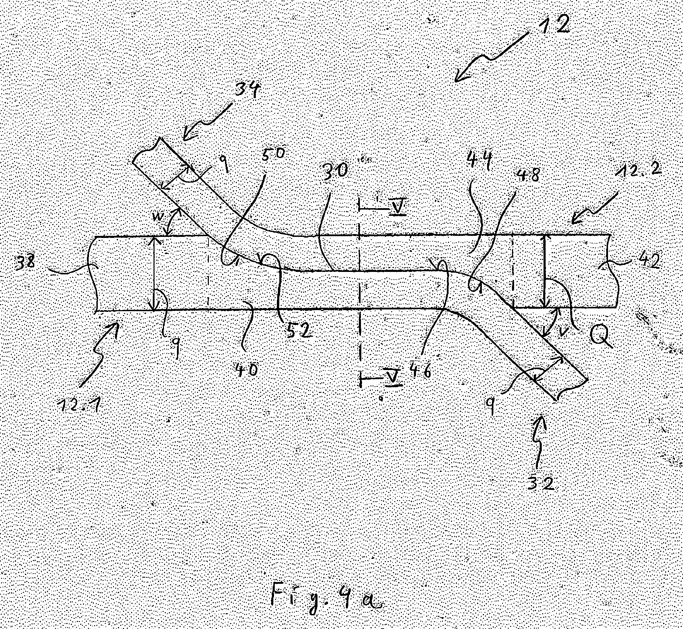

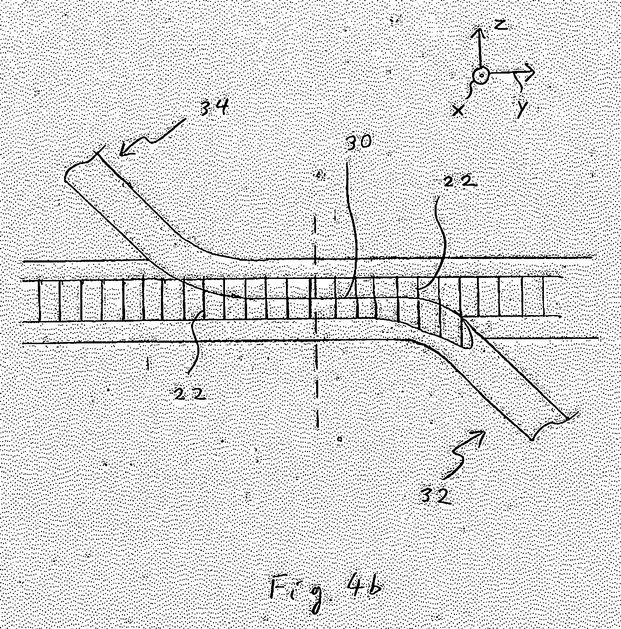

Figur 4 zeigt einen vergrößerten Ausschnitt aus der Figur 3 für den Bereich der Lichteinkopplung. Im Einzelnen zeigt die Figur 4 eine Lichtleiteranordnung 12, die einen ersten Lichtleiter 12.1 und einen zweiten Lichtleiter 12.2 aufweist. Der erste Lichtleiter weist einen Einkoppelarm 32 mit einem ersten Querschnitt q, einen Lichtleiterbereich 38 mit einem zweiten Querschnitt Q, und einen Übergangsbereich 40 auf. Der Übergangsbereich 40 liegt zwischen dem Einkoppelarm 32 und dem Lichtleiterbereich 38.

Der zweite Lichtleiter 12.2 weist einen Einkoppelarms 34 mit einem ersten Querschnitt q, einen Lichtleiterbereich 42 mit einem zweiten Querschnitt Q, und einen Übergangsbereich 44 auf. Der Übergangsbereich 44 liegt auch hier zwischen dem Einkoppelarm 34 und dem Lichtleiterbereich 42.

Für beide Übergangsbereiche 40, 44 gilt, dass sich der Querschnitt des Übergangsbereiches 40, 44 in der jeweiligen Lichtausbreitungsrichtung kontinuierlich und monoton vom ersten Querschnitt q auf den zweiten Querschnitt Q vergrößert. Der erste Querschnitt q ist bevorzugt halb so groß wie der zweite Querschnitt Q.

Der Einkoppelarm 32 des ersten Lichtleiters 12.1 weist eine erste Anlagefläche 46 auf, und der Übergangsbereich 44 des zweiten Lichtleiters 34 weist eine zweite Anlagefläche 48 auf. Der Einkoppelarm 34 des zweiten Lichtleiters 12.2 weist eine erste Anlagefläche 50 auf, und der Übergangsbereich 40 des ersten Lichtleiters 32 weist eine zweite Anlagefläche 52 auf. Zwischen aneinander liegenden Anlageflächen bildet sich jeweils der in Verbindung mit der Figur 3 erwähnte Luftspalt aus.

Die ersten Anlageflächen und die zweiten Anlageflächen sind so geformt, dass sich der Einkoppelarm des einen Lichtleiters jeweils in den Übergangsbereich des anderen Lichtleiters einfügt. Dabei liegt die zweite Anlagefläche des Übergangsbereichs des einen Lichtleiters an der ersten Anlagefläche des Einkoppelarms des anderen Lichtleiters an.

Figur 4b zeigt, dass jeder der beiden Einkoppelarme 32, 34 in einem an dem Übergangsbereich des jeweils anderen Lichtleiters anliegenden Abschnitt des jeweiligen Einkoppelarms 32, 34 zur Vorderseite des Einkoppelarms umlenkende Umlenkelemente 24 auf einer Rückseite des Einkoppelarms aufweist. Figur 4b zeigt eine Vorderansicht. Aufgrund der Transparenz sind die Umlenkelemente 24 durch den Lichtleiter hindurch sichtbar.

Die Umlenkelemente der im Übergangsbereich aneinander anliegenden Lichtleiter können sich dabei zu einer Breite addieren, die der Breite der außerhalb der

Übergangsbereiche angeordneten Umlenkelemente entspricht. Dies ist im linken Teil der Figur 4b dargestellt.

Alternativ dazu können sich die Umlenkelemente der im Übergangsbereich aneinander anliegenden Lichtleiter zu einer Breite addieren, die größer als die Breite der außerhalb der Übergangsbereiche angeordneten Umlenkelemente ist. Dies ist im rechten Teil der Figur 4b dargestellt.

Die addierte Breite ist ein Konstruktionsparameter, mit dem sich die dort ausgekoppelte Lichtmenge beeinflussen lässt. Je größer die addierte Breite ist, desto mehr Licht wird dort ausgekoppelt. Es ist bevorzugt, dass die Breite jeweils so groß ist, dass der Übergangsbereich jeweils genauso hell leuchtet wie benachbarte Lichtleiterbereiche.

Zwischen den aneinander anliegenden Anlageflächen beider Lichtleiter bildet sich ein schmaler Luftspalt 30, so dass zwischen den Anlageflächen möglichst kein optischer Kontakt besteht. Damit ist gemeint, dass die jeweilige Anlagefläche, wenn man sie vom Inneren des zugehörigen Lichtleiters her betrachtet, eine Grenzfläche darstellt, an der gegebenenfalls interne Totalreflexionen auftreten, so dass dort möglichst kein Licht in den jeweils anderen Lichtleiter übertritt.

Das in ein stirnseitiges, distales Ende eines Einkoppelarmes eingekoppelte Licht propagiert daher in dem zugehörigen Lichtleiter, bis es nach einer Reflexion an einem der Umlenkelemente 24 des Lichtleiters über die Vorderseite des Lichtleiters ausgekoppelt wird. Dadurch, dass die Einkoppelarme und die Übergangsbereiche in ihren aneinander anliegenden Bereichen der beiden Lichtleiter Umlenkelemente aufweisen, kann dort genauso Licht ausgekoppelt werden wie in den übrigen Lichtleiterbereichen. In einer bevorzugten Ausgestaltung ergänzen sich die Formen und Querschnitte eines Einkoppelarms des einen Lichtleiters und des Übergangsbereiches des anderen Lichtleiters zu einem Gesamtquerschnitt, der mindestens so groß ist wie der Querschnitt des sich an den Übergangsbereich anschließenden Lichtleiters.

Dadurch können in der Rückseite des Übergangsbereichs des einen Lichtleiters und des daran anliegenden Einkoppelarms des anderen Lichtleiters ausreichend viele und große Umlenkelemente angeordnet werden, um,dort so viel Licht auszukoppeln, wie auch in den benachbarten einstückigen Lichtleiterbereichen ausgekoppelt wird, Dadurch wird insgesamt ein sehr homogen hell leuchtendes Erscheinungsbild der Lichtleiteranordnung erzielt, bei dem der Ort der Lichteinkopplung nicht mehr durch eine Inhomogenität der Helligkeit auffällt.

Die beiden in der Figur 4 dargestellten Einkoppelarme schließen mit dem Lichtleiterbereich des jeweils anderen Lichtleiters einen Winkel v, w ein. Dieser Winkel v, w wird jeweils durch die Führungslinien eines der beiden Lichtleiter und des Einkoppelarms des jeweils anderen der beiden Lichtleiter definiert. Die Lichtleiteranordnung ist bevorzugt so ausgestaltet, dass dieser Winkel v, w mit zunehmender Annäherung des Einkoppelarms des einen Lichtleiters an den Lichtleiterbereich des anderen Lichtleiters kontinuierlich kleiner wird, bis er sich auf den Wert Null verringert hat und die Führungslinien der Einkoppelarme damit parallel zu den Führungslinien der Lichtleiterbereich verlaufen. Die ersten Querschnitte q der Einkoppelarme verschwinden dabei vollständig im Querschnitt Q des jeweilig zugehörigen Lichtleiters.

Dabei berühren sich die Anlageflächen nur soweit, dass sie über den größten Teil ihre Fläche durch einen minimalen Luftspalt 30 voneinander getrennt verlaufen. Dort, wo die Führungslinien den parallelen Verlauf aufweisen, ergänzen sich die beiden halben Querschnitte, von denen einer zu einem Übergangsbereich und der andere zu einem Einkoppelarm gehört, zu einem ganzen Querschnitt. Mit dem Begriff des ganzen Querschnitts ist dabei ein Querschnitt des Lichtleiterbereichs gemeint, also ein außerhalb des Übergangsbereichs liegender einstückig zusammenhängender Querschnitt der Lichtleiteranordnung gemeint.

In einer bevorzugten Ausgestaltung erfolgt die Einkopplung weitgehend orthogonal zu den quer zu einer Führungslinie 26 in Figur 1 ausgerichteten Kanten der Lichtumlenkelemente 24, die hier als Prismen realisiert sind.

Verschiebt man die Schnittebene in Richtung des im Einkoppelarm propagierenden Lichtes, so vergrößert sich der Querschnitt des Einkoppelarms auf auf den gesamten Lichtleiterquerschnitt, und der jeweils komplementäre Querschnitt des Übergangsbereichs nimmt ab, bis er vollständig verschwunden ist. In dem Mäß, in dem sich der Querschnitt des Übergangsbereichs des einen Lichtleiters entgegen der Richtung des in ihm propagierenden Lichtes vergrößert, verläuft tangential dazu der Einkoppelarm des anderen Lichtleiters zur Seite weg auf sein distales Ende mit der dort angeordneten Lichtquelle zu. Entlang der Trennung zwischen den Anlageflächen beider Lichtleiter der Lichtleiteranordnung verlaufen die Anlageflächen tangential zueinander.

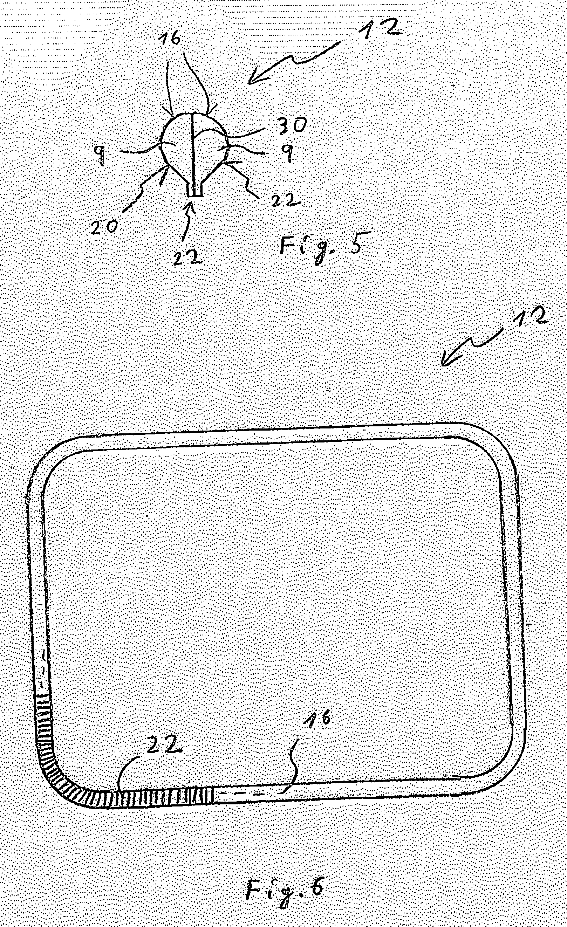

Figur 5 zeigt einen bevorzugten Querschnitt der Lichtleiteranordnung in einem zentralen Bereich der beiden aneinander anliegenden Anlageflächen des Einkoppelarmes eines Einkoppelarms und eines Übergangsbereichs. Der Gesamtquerschnitt Q teilt sich hier in zwei gleich große Halbquerschnitte q auf. Die Schnittlinie zwischen den beiden Halbquerschnitten definiert die Lage des Luftspaltes 30 zwischen den beiden aneinander anliegenden Anlageflächen und verläuft zwischen der Mitte der elliptischen oder runden Vorderseite 16 und der Mitte der Rückseite mit den Umlenkelementen 24.

Die als Lichtaustrittsseite dienende Vorderseite 16 ist in der dargestellten Ausgestaltung konvex gewölbt. Dadurch wird eine Linsenwirkung erzielt, die die von außen durch die Vorderseite 16 hindurch sichtbare Breite der Lichtumlenkelemente 24 zu Lasten der sichtbaren Breite der schrägen Seitenflächen 20, 22 vergrößert.

Besonders bevorzugt ist eine Querschnittsgeometrie, bei der die durch das Material des Lichtleiters 12 und die Krümmung seiner Vorderseite 12 erzielte Linsenwirkung und die Breite der Lichtumlenkelemente 24 sowie die außerhalb der Lichtumlenkelemente noch verbleibende Breite der Seitenflächen 20, 22 in Richtung so aufeinander abgestimmt sind, dass durch die Vorderseite 16 hindurch nur noch die Lichtumlenkelemente 24 sichtbar sind und die Seitenflächen 20, 22 nicht mehr sichtbar sind.

Dann ergibt sich das in der Figur 6 dargestellte Erscheinungsbild, bei dem sich die Breite der durch die Vorderseite sichtbaren Umlenkelemente 24 über die ganze Breite der als Lichtaustrittsfläche dienenden Vorderseite 16 erstreckt. Die sichtbaren Umlenkelemente 24 sind in der Figur 6 nur im linken unteren Teil dargestellt. Sie sind aber in der Realität bevorzugt über die ganze Vorderseite 16 sichtbar, so dass sich das gewünschte homogene Erscheinungsbild ergibt. Die Homogenität wird dabei noch dadurch verbessert, dass die sichtbar erscheinende Breite der Umlenkelelemente der Breite der Vorderseite entspricht.

Im Folgenden werden ergänzend einige Merkmale bevorzugter Ausgestaltungen aufgeführt. In einer bevorzugten Ausgestaltung weist die Lichtleiteranordnung einen ersten Lichtleiter und einen zweiten Lichtleiter auf. Die Lichtleiteranordnung besitzt eine Vorderseite, eine der Vorderseite gegenüberliegende und Lichtumlenkelemente aufweisende Rückseite sowie die Vorderseite und die Rückseite verbindende Seitenflächen und ist dazu eingerichtet, Licht, das an Seitenflächen und einer Vorderseite interne Totalreflexionen erfährt, in einer Längsrichtung des jeweiligen Lichtleiterabschnitts zu leiten, und an seinen Lichtumlenkelementen reflektiertes Licht über seine Vorderseite austreten zu lassen. Jeder der beiden Lichtleiter weist einen Einkoppelarm mit einem vergleichsweise kleinen Querschnitt q, einen von dem vergleichsweise kleinen Querschnitt q auf einen vergleichsweise großen Querschnitt Q übergehenden Übergangsbereich und einen Lichtleiterbereich mit dem vergleichsweise großen Querschnitt Q auf. Jeder Einkoppelarm besitzt auf seinem dem Übergangsbereich abgewandten distalen Ende eine Lichteintrittsfläche. Der Übergangsbereich und der Einkoppelarm von jedem der beiden Lichtleiter weisen jeweils Anlageflächen auf, die so geformt sind, dass sich der Einkoppelarm des einen Lichtleiters jeweils in den Übergangsbereich des anderen Lichtleiters so einfügt, dass die Lichtleiter in der Lichtleiteranordnung so angeordnet sind, dass die Anlagefläche des Übergangsbereichs des einen Lichtleiters an der Anlagefläche des Einkoppelarms des anderen Lichtleiters flächig anliegt. Dabei erscheint jeder der beiden Lichtleiter jeweils als eine von den Einkoppelarmen verschiedene Fortsetzung des jeweils anderen Lichtleiters erscheint. Jeder der beiden Einkoppelarme trägt bevorzugt in dem an dem Übergangsbereich des jeweils anderen Lichtleiters anliegenden Abschnitt Licht zu seiner Vorderseite umlenkende Umlenkelemente. Die Anlageflächen sind jeweils in der Richtung, in der sich die Querschnitte vergrößern, gewölbt. Dabei ist die Anlagefläche des Übergangsbereichs jeweils konvex gewölbt, und die Anlagefläche des Einkoppelarms ist konkav gewölbt. In der Richtung, die in einem zwischen den Übergangsbereichen beider Lichtleiter liegenden Querschnitt zwischen der Mitte der Rückseite und der Mitte der Vorderseite der beiden Lichtleiter und senkrecht zur Richtung verläuft, in der sich die Querschnitte vergrößern, sind die Anlageflächen der Einkoppelarme und der Übergangsbereiche eben. Dies bildet sich in dem gerade verlaufenden Luftspalt 30 in der Figur 5 ab. Die Lichtleiter sind so angeordnet dass das Licht in aneinander anliegenden Abschnitten (Einkoppelarme, Übergangsbereiche) der beiden Lichtleiter in dem einen der beiden Lichtleiter in einer Richtung propagiert, die der Propagationsrichtung des Lichtes in dem anderen der beiden Lichtleiter entgegengesetzt ist.

Betrachtet man die in Figur 4 dargestellte Lichtleiteranordnung jeweils entlang eines Weges, welche der Richtung des eingekoppelten Lichtes folgt, so lassen sich vier Abschnitte unterscheiden. Ein erster Abschnitt der Lichtleiteranordnung zeichnet sich dadurch aus, dass ein Abstand zwischen dem ersten Lichtleiter 12.1 und dem Einkoppelarm 34 des zweiten Lichtleiters 12.2 in einer Hauptlichtausbreitungsrichtung des Einkoppelarms 34 des zweiten Lichtleiters 12.2 kleiner wird.

Ein zweiter Abschnitt der Lichtleiteranordnung zeichnet sich dadurch aus, dass er sich in der Hauptlichtausbreitungsrichtung des Einkoppelarms 34 des zweiten Lichtleiters 12.2 an den ersten Abschnitt anschließt. In dem zweiten Abschnitt der Lichtleiteranordnung ist der Querschnitt des Einkoppelarms 34 des zweiten Lichtleiters 12.2 konstant. Der Querschnitt des ersten Lichtleiters 12.1 nimmt dort in der Hauptlichtausbreitungsrichtung des Einkoppelarms 34 des zweiten Lichtleiters 12.2 ab, bis er nach Form und Größe dem Querschnitt des Querschnitt des Einkoppelarms 34 entspricht (der in diesem Abschnitt konstant ist), so dass der Gesamtquerschnitt der Anordnung an dieser Stelle je zur Hälfte von dem Einkoppelarm 34 und dem Lichtleiterarm 12.1 bereitgestellt wird. Dort endet der zweite Abschnitt der Lichtleiteranordnung und es beginnt ein dritter Abschnitt der Lichtleiteranordnung.

Die dem ersten Lichtleiter 12.1 zugewandte Grenzfläche 50 des Einkoppelarms 34 besitzt im zweiten Abschnitt der Lichtleiteranordnung 12 eine Form, die komplementär ist zu der diesem Einkoppelarm 34 zugewandten Grenzfläche 52 des ersten Lichtleiters 12.1. Diese beiden Grenzflächen bilden damit zueinander passende Anlageflächen.

Das bedeutet insbesondere, dass die beiden Flächen 52, 54 für Paare von Punkten, von denen ein erster Punkt in einer ersten der beiden Flächen liegt und ein zweiter Punkt in einer zweiten der beiden Flächen liegt, und die sich in der Anordnung einander benachbart gegenüber liegen, Normalen in diesen Punkten aufweisen, von denen die Normale des ersten Punktes durch den zweiten Punkt geht und die Normale des zweiten Punktes durch den ersten Punkt geht.

Die Anlageflächen sind in einer quer zur Hauptausbreitungsrichtung des Lichtes liegenden Querrichtung eben und weisen quer dazu eine Wölbung auf.

Der dritte Abschnitt der Lichtleiteranordnung entspricht bis auf eine Vertauschung der Merkmale des ersten Lichtleiters und des zweiten Lichtleiters dem zweiten Abschnitt der Lichtleiteranordnung.

Der vierte Abschnitt entspricht dem ersten Abschnitt mit dem Unterschied, dass ein Abstand zwischen dem zweiten Lichtleiter 12.2 und dem Einkoppelarm 32 des ersten Lichtleiters 12.1 in einer Hauptlichtausbreitungsrichtung des Einkoppelarms 32 des ersten Lichtleiters 12.1 kleiner wird.

Ein Einkoppelarm bildet jeweils einen stoffschlüssig mit seinem Lichtleiter zusammenhängendes Element. In den Abschnitten 1 bis 4 verlaufen die Lichtleiterabschnitte ohne optischen Kontakt getrennt voneinander, wobei sie in den Abschnitten 2 und 3 durch zwischen den flächig, punktweise oder linienförmig aneinander anliegenden Anlageflächen auftretenden Luftspalt optisch voneinander getrennt sind.

Im Übergang zwischen den Abschnitten 2 und 3 verläuft der Luftspalt zwischen einer Mitte der Vorderseite und einer Mitte der Rückseite der Lichtleiteranordnung. Dort ist der Abstand zwischen Vorderseite und Rückseite maximal. Vergleiche Figur 5.

## Patentansprüche

1. Kraftfahrzeugbeleuchtungseinrichtung mit einer Lichtleiteranordnung (12), die eine Vorderseite (16), eine der Vorderseite (16) gegenüberliegende und Lichtumlenkelemente (24) aufweisende Rückseite (18) sowie die Vorderseite (16) und die Rückseite (18) verbindende Seitenflächen (20, 22) aufweist und welche Anordnung dazu eingerichtet ist, Licht, das an den Seitenflächen (20, 22) und der Vorderseite (16) interne Totalreflexionen erfährt, in einer Längsrichtung der Lichtleiteranordnung (12) zu leiten, und an seinen Lichtumlenkelementen (24) reflektiertes Licht über seine Vorderseite (16) austreten zu lassen,
**dadurch gekennzeichnet dass** die Lichtleiteranordnung (12) wenigstens einen ersten Lichtleiter (12.1) und einen zweiten Lichtleiter (12.2) aufweist, wobei jeder der beiden Lichtleiter (12.1, 12.2) einen Einkoppelarm (32, 34) mit einem ersten Querschnitt (q), einen Lichtleiterbereich (38) mit einem zweiten Querschnitt (Q), und einen Übergangsbereich (40, 44) aufweist, der zwischen dem Einkoppelarm (32) und dem Lichtleiterbereich (38) liegt und in dem sich der Querschnitt kontinuierlich und monoton vom ersten Querschnitt auf den zweiten Querschnitt vergrößert, wobei der Einkoppelarm (32, 34) eines jeden der beiden Lichtleiter (12.1, 12.2) jeweils eine erste Anlagefläche (50) aufweist und der Übergangsbereich (40, 44) eines jeden der beiden Lichtleiter (12.1, 12.2) jeweils eine zweite Anlagefläche (52) aufweist, und wobei die ersten Anlageflächen (50) und die zweiten Anlageflächen (52) so geformt sind, dass sich der Einkoppelarm (32, 34) des einen Lichtleiters jeweils in den Übergangsbereich des anderen Lichtleiters einfügt, wobei die zweite Anlagefläche (52) des Übergangsbereichs des einen Lichtleiters (12.2) an der ersten Anlagefläche (50) des Einkoppelarms des anderen Lichtleiters (12.1) anliegt, und dass jeder der beiden Einkoppelarme (32, 34) in einem an dem Übergangsbereich (40, 44) des jeweils anderen Lichtleiters (12.1, 12.2) anliegenden Abschnitt des jeweiligen Einkoppelarms (32, 34) zur Vorderseite des Einkoppelarms (32, 34) umlenkende Umlenkelemente (24) auf einer Rückseite des Einkoppelarms (32, 34) aufweist.

2. Beleuchtungseinrichtung nach Anspruch 1, **dadurch gekennzeichnet, dass** die Lichtleiteranordnung (12) eine geschlossene Ringform besitzt.

3. Beleuchtungseinrichtung nach einem der vorhergehenden Ansprüche, **dadurch gekennzeichnet, dass** jeder Einkoppelarm (32, 34) mit seinem Lichtleiter (12.1, 12.2) eine einstückige und damit stoffschlüssig zusammenhängende Einheit bildet.

4. Beleuchtungseinrichtung nach einem der vorhergehenden Ansprüche, **dadurch gekennzeichnet, dass** die Anlageflächen (50, 52) jeweils in der Richtung, in der sich die Querschnitte (q, Q) vergrößern, gewölbt sind, wobei die Anlagefläche (50, 52) des Übergangsbereichs (40, 44) jeweils konkav gewölbt ist und die Anlagefläche des Einkoppelarms (32, 34) jeweils konvex gewölbt ist.

5. Beleuchtungseinrichtung nach einem der vorhergehenden Ansprüche, **dadurch gekennzeichnet, dass** der erste Querschnitt (q) halb so groß ist wie der zweite Querschnitt (Q).

6. Beleuchtungseinrichtung nach einem der vorhergehenden Ansprüche, **dadurch gekennzeichnet, dass** sich die Anlageflächen (50, 52) nur soweit berühren, dass sie über den größten Teil ihre Fläche durch einen minimalen Luftspalt (30) voneinander getrennt verlaufen.

7. Beleuchtungseinrichtung nach einem der vorhergehenden Ansprüche, **dadurch gekennzeichnet, dass** sich die Breiten der Umlenkelemente (24) der im Übergangsbereich (40, 44) aneinander anliegenden Lichtleiter (12.1, 12.2) dort zu einer Breite addieren, die der Breite der außerhalb der Übergangsbereiche (40, 44) angeordneten Umlenkelemente (24) entspricht, oder dass sich die Breiten der Umlenkelemente (24) der im Übergangsbereich (40, 44) aneinander anliegenden Lichtleiter (12.1, 12.2) dort zu einer Breite addieren, die größer als die Breite der außerhalb der Übergangsbereiche (40, 44) angeordneten Umlenkelemente ist.

8. Beleuchtungseinrichtung nach einem der vorhergehenden Ansprüche, **dadurch gekennzeichnet, dass** ein Einkoppelarm (32, 34) eines Lichtleiters (12.1, 12.2) mit dem Lichtleiterbereich des jeweils anderen Lichtleiters (12.1, 12.2) einen Winkel (v, w) einschließt, der jeweils durch Führungslinien des Lichtleiterbereichs und des Einkoppelarms (32, 34) definiert wird.

9. Beleuchtungseinrichtung nach einem der vorhergehenden Ansprüche, **dadurch gekennzeichnet, dass** dieser Winkel (v, w) mit zunehmender Annäherung des Einkoppelarms (32, 34) des einen Lichtleiters (12.1, 12.2) an den Lichtleiterbereich (38) des anderen Lichtleiters (12.1, 12.2) kontinuierlich kleiner wird, bis er sich auf den Wert Null verringert hat und die Führungslinien der Einkoppelarme (32, 34) damit parallel zu den Führungslinien der Lichtleiterbereich (38) verlaufen.

10. Beleuchtungseinrichtung nach einem der vorhergehenden Ansprüche, **dadurch gekennzeichnet, dass** die ersten Querschnitte (q) der Einkoppelarme (32, 34) dabei vollständig im Querschnitt (Q) des jeweilig zugehörigen Lichtleiters (12.1, 12.2) verschwinden.

11. Beleuchtungseinrichtung nach einem der vorhergehenden Ansprüche, **dadurch gekennzeichnet, dass** sich die beiden halben Querschnitte, von denen einer zu einem Übergangsbereich (40, 44) und der andere zu einem Einkoppelarm (32, 34) gehört, dort, wo die Führungslinien den parallelen Verlauf aufweisen, zu einem ganzen Querschnitt ergänzen.

12. Beleuchtungseinrichtung nach einem der vorhergehenden Ansprüche, **dadurch gekennzeichnet, dass** die Anlageflächen (52) beider Lichtleiter (12.1, 12.2) der Lichtleiteranordnung (12) tangential zueinander verlaufen.

13. Beleuchtungseinrichtung nach einem der vorhergehenden Ansprüche, **dadurch gekennzeichnet, dass** die als Lichtaustrittsseite dienende Vorderseite (16) konvex gewölbt ist.

14. Beleuchtungseinrichtung nach einem der vorhergehenden Ansprüche, **dadurch gekennzeichnet, dass** die Lichtleiteranordnung (12) eine Querschnittsgeometrie aufweist, bei der die durch das Material der Lichtleiteranordnung (12) und die Krümmung ihrer Vorderseite (16) erzielte Linsenwirkung und die Breite der Lichtumlenkelemente (24) sowie die außerhalb der Lichtumlenkelemente (24) noch verbleibende Breite der Seitenflächen (20, 22) in Richtung so aufeinander abgestimmt sind, dass durch die Vorderseite (16) hindurch nur noch die Lichtumlenkelemente (24) sichtbar sind und die Seitenflächen (20, 22) nicht mehr sichtbar sind.

## Claims

1. Lighting device for a motor vehicle with a light conductor arrangement 12, comprising a front side and opposite of it a rear side comprising light deflectors, as well as side areas (20, 22) connecting the front and the rear side 18, said arrangement being adapted to direct light, which experiences a total internal reflection on the side areas (20, 22) and on the front side (16), into a longitudinal direction of the light conductor arrangement (12), and to let light, which was reflected at its light deflectors (24), emit through the front side (16), **characterized in that** the light conductor arrangement (12) features at least one first light conductor (12.1) and a second light conductor (12.2), wherein each one of the two light conductors (12.1, 12.2) comprises one coupling arm (32, 34) having a first cross section (q), a light conductor area (38) with a second cross section (Q), and a transition area (40, 44), which is located between the coupling arm (32) and the light conductor area (38), and in which the cross section is continually and monotonously enlarging from the first cross section until the second cross section, wherein the coupling arm (32, 34) of each of the two light conductors (12.1, 12.2) comprises a first contact surface (50) and the transition area (40, 44) of each of the two light conductors (12.1, 12.2) comprises a second contact surface (52), and wherein the first contact surfaces (50 and the second contact surfaces (52) are formed in such a way that the coupling arm (32, 34) of the one light conductor inserts into the transition area of the respective other light conductor, wherein the second contact surface (52) of the transition area of the one light conductor (12.2), contacts the first contact surface (50) of the coupling arm of the other light conductor, and that each of the two coupling areas comprises, in a section that contacts the transition area of the respective other coupling arm deflector elements (24) on a rear side of the coupling arm (32, 34) which deflect towards the front side of the coupling arm (32, 34) .

2. Lighting device according to claim 1, **characterized in that** the light conductor arrangement (12) is made in a closed ring shape.

3. Lighting device according to one of the preceding claims, **characterized in that** each coupling arm (32, 34) with its light conductor (12.1, 12.2) is made in one piece and thus forms a firmly bonded and continuous unit.

4. Lighting device according to one of the preceding claims, **characterized in that** the contact surfaces (50, 52) are arched in the respective direction in which the cross section (q, Q) is enlarging, whereby the contact surface (50, 52) of the transition area (40, 44) is always formed to be concave and the contact surface of the coupling arm (32, 34) is formed to be convex.

5. Lighting device according to one of the preceding claims, **characterized in that** the first cross section (q) is half the size of the second cross section (Q).

6. Lighting device according to one of the preceding claims, **characterized in that** the contact surfaces (50, 52) only touch to the extent that they are separated by a minimal air gap (30) for the major part of their surface.

7. Lighting device according to one of the preceding claims, **characterized in that** the widths of the deflector elements (24) of the light conductors (12.1, 12.2), which are aligned alongside each other in contact to each other in the transition area (40, 44), add up to a width, that corresponds to the width of the deflector elements that are arranged outside of the transition areas (40, 44), or that the widths of the deflector elements (24) of the light conductors (12.1, 12.2), which are aligned alongside in contact with each other in the transition area (40, 44), add up to a width, that is larger than the width of the deflectors that are arranged outside of the transition areas (40, 44).

8. Lighting device according to one of the preceding claims, **characterized in that** a coupling arm (32, 34) of a light conductor is set in an angle (v, w) with the light conductor area (12.1, 12.2) of the respective other light conductor, which is defined in each case by means of guiding lines of the light conductor area and of the coupling arm (32, 34).

9. Lighting device according to one of the preceding claims, **characterized in that** this angle (v, w) decreases continually with increasing approximation of the coupling arm (32, 34) of the one light conductor towards the light conductor area (38) of the other light conductor (12.1, 12.2), until it has reduced to the value of zero and the guiding lines of the coupling arms (32, 34) thus run parallel to the guiding lines of the light conductor area (38) .

10. Lighting device according to one of the preceding claims, **characterized in that** the first cross sections (q) of the coupling arms (32, 34) totally disappear inside the cross section (Q) of the corresponding light conductor (12.1, 12.2) respectively.

11. Lighting device according to one of the preceding claims, **characterized in that** the two half cross sections, where one belongs to a transition area (40, 44) and the other to a coupling arm (32, 34), add up to a total cross section at the point where the guiding lines show a parallel course.

12. Lighting device according to one of the preceding claims, **characterized in that** the contact surfaces (32) of the two light conductors (12.1, 12.2) of the light conductor arrangement (12) run tangential towards each other.

13. Lighting device according to one of the preceding claims, **characterized in that** the front side (16), which serves as the light output side, is curved convexly.

14. Lighting device according to one of the preceding claims, **characterized in that** the light conductor arrangement (12) features a cross section geometry, which is arranged in such a way, that through the lens effect that is achieved by means of the material of the light conductor arrangement (12) and the curvature of its front side (16), and the width of the light deflectors (24) as well as the remaining width of the side areas (20, 22) outside of the light deflectors in this direction, are mutually aligned in such a way, that only the light deflectors (24) are visible through the front side (16) and that the side areas (20, 22) are no longer visible.

## Revendications

1. Dispositif d'éclairage de véhicule automobile avec un agencement de guides d'ondes optiques (12) qui présente un côté avant (16), un côté arrière (18) présentant des éléments de déviation de lumière (24) et en regard du côté avant (16), ainsi que des surfaces latérales (20, 22) reliant le côté avant (16) et le côté arrière (18) et lequel agencement est aménagé afin de conduire de la lumière qui subit des réflexions totales internes sur les surfaces latérales (20, 22) et le côté avant (16), dans un sens longitudinal de l'agencement de guides d'ondes optiques (12), et de laisser sortir de la lumière réfléchie sur ses éléments de déviation de lumière (24) sur son côté avant (16), **caractérisé en ce que** l'agencement de guides d'ondes optiques (12) présente au moins un premier guide d'ondes optiques (12.1) et un second guide d'ondes optiques (12.2), chacun des deux guides d'ondes optiques (12.1, 12.2) présentant un bras d'injection (32, 34) avec une première section (q), une zone de guides d'ondes optiques (38) avec une seconde section (Q), et une zone de transition (40, 44) qui se trouve entre le bras d'injection (32) et la zone de guides d'ondes optiques (38) et dans laquelle la section s'agrandit en continu et de manière monotone de la première section à la seconde section, le bras d'injection (32, 34) d'un des deux guides d'ondes optiques (12.1, 12.2) présentant respectivement une première surface d'appui (50) et la zone de transition (40, 44) d'un des deux guides d'ondes optiques (12.1, 12.2) présentant respectivement une seconde surface d'appui (52), et les premières surfaces d'appui (50) et les secondes surfaces d'appui (52) étant formées de sorte que le bras d'injection (32, 34) d'un guide d'ondes optiques s'insère respectivement dans la zone de transition de l'autre guide d'ondes optiques, la seconde surface d'appui (52) de la zone de transition d'un guide d'ondes optiques (12.2) reposant contre la première surface d'appui (50) du bras d'injection de l'autre guide d'ondes optiques (12.1), et **en ce que** chacun des deux bras d'injection (32, 34) présente, dans une section reposant contre la zone de transition (40, 44) de l'autre guide d'ondes optiques respectif (12.1, 12.2) du bras d'injection (32, 34) respectif, des éléments de déviation (24) déviant vers le côté avant du bras d'injection (32, 34) sur un côté arrière du bras d'injection (32, 34).

2. Dispositif d'éclairage selon la revendication 1, **caractérisé en ce que** l'agencement de guides d'ondes optiques (12) possède une forme annulaire fermée.

3. Dispositif d'éclairage selon l'une quelconque des revendications précédentes, **caractérisé en ce que** chaque bras d'injection (32, 34) forme, avec son guide d'ondes optiques (12.1, 12.2), une unité d'un seul tenant et ainsi continue par liaison de matière.

4. Dispositif d'éclairage selon l'une quelconque des revendications précédentes, **caractérisé en ce que** les surfaces d'appui (50, 52) sont courbées respectivement dans la direction, dans laquelle les sections (q, Q) s'agrandissent, la surface d'appui (50, 52) de la zone de transition (40, 44) étant courbée respectivement de manière concave et la surface d'appui du bras d'injection (32, 34) étant courbée respectivement de manière convexe.

5. Dispositif d'éclairage selon l'une quelconque des revendications précédentes, **caractérisé en ce que** la première section (q) présente la moitié de la seconde section (Q).

6. Dispositif d'éclairage selon l'une quelconque des revendications précédentes, **caractérisé en ce que** les surfaces d'appui (50, 52) ne se touchent que dans la mesure où elles s'étendent séparément l'une de l'autre sur la plus grande partie de leur surface par une fente d'air minimale (30).

7. Dispositif d'éclairage selon l'une quelconque des revendications précédentes, **caractérisé en ce que** les largeurs des éléments de déviation (24) des guides d'ondes optiques (12.1, 12.2) reposant l'un contre l'autre dans la zone de transition (40, 44) s'y ajoutent pour former une largeur qui correspond à la largeur des éléments de déviation (24) agencés en dehors des zones de transition (40, 44), ou **en ce que** les largeurs des éléments de déviation (24) des guides d'ondes optiques (12.1, 12.2) reposant l'un contre l'autre dans la zone de transition (40, 44) s'y ajoutent pour former une largeur qui est plus grande que la largeur des éléments de déviation agencés en dehors des zones de transition (40, 44).

8. Dispositif d'éclairage selon l'une quelconque des revendications précédentes, **caractérisé en ce qu'**un bras d'injection (32, 34) d'un guide d'ondes optiques (12.1, 12.2) forme, avec la zone de guide d'ondes optiques de l'autre guide d'ondes optiques (12.1, 12.2) respectif, un angle (v, w) qui est défini respectivement par des lignes de guidage de la zone de guide d'ondes optiques et du bras d'injection (32, 34).

9. Dispositif d'éclairage selon l'une quelconque des revendications précédentes, **caractérisé en ce que** cet angle (v, w) lorsque le bras d'injection (32, 34) d'un guide d'ondes optiques (12.1, 12.2) se rapproche de plus en plus de la zone de guide d'ondes optiques (38) de l'autre guide d'ondes optiques (12.1, 12.2), est plus petit en continu jusqu'à ce qu'il ait diminué à la valeur zéro et les lignes de guidage des bras d'injection (32, 34) s'étendent ainsi parallèlement aux lignes de guidage de la zone de guide d'ondes optiques (38).

10. Dispositif d'éclairage selon l'une quelconque des revendications précédentes, **caractérisé en ce que** les premières sections (q) des bras d'injection (32, 34) disparaissent complètement dans la section (Q) du guide d'ondes optiques (12.1, 12.2) afférent respectivement.

11. Dispositif d'éclairage selon l'une quelconque des revendications précédentes, **caractérisé en ce que** les deux demi-sections, dont une appartient à une zone de transition (40, 44) et l'autre à un bras d'injection (32, 34) là où les lignes de guidage présentent le tracé parallèle, se complètent pour former une section entière.

12. Dispositif d'éclairage selon l'une quelconque des revendications précédentes, **caractérisé en ce que** les surfaces d'appui (52) de deux guides d'ondes optiques (12.1, 12.2) de l'agencement de guides d'ondes optiques (12) s'étendent tangentiellement l'une à l'autre.

13. Dispositif d'éclairage selon l'une quelconque des revendications précédentes, **caractérisé en ce que** le côté avant (16) servant de côté de sortie de lumière est courbé de manière convexe.

14. Dispositif d'éclairage selon l'une quelconque des revendications précédentes, **caractérisé en ce que** l'agencement de guides d'ondes optiques (12) présente une géométrie de section, pour laquelle l'action de lentille obtenue par le matériau de l'agencement de guides d'ondes optiques (12) et la courbure de son côté avant (16), et la largeur des éléments de déviation de lumière (24) ainsi que la largeur restant encore en dehors des éléments de déviation de lumière (24) des surfaces latérales (20, 22) sont adaptées en direction les unes aux autres de sorte que seuls les éléments de déviation de lumière (24) soient visibles et les surfaces latérales (20, 22) ne soient plus visibles au travers du côté avant 16).
